# EUROPÄISCHE PATENTANMELDUNG

(11) **EP 1 148 756 A1**
(43) Veröffentlichungstag der Anmeldung: **24.10.2001**
(21) Anmeldenummer: 00106590.3
(22) Anmeldetag: 28.03.2000
(51) Int. Cl.: H04Q 11/04, H04Q 3/62, H04M 3/493

(54) **Verfahren zur Abgabe von Daten in einem Telekommunikationssystem sowie Vermittlungszentrale**

(71) Anmelder: Ascom AG, 3000 Bern 14 (CH)
(72) Erfinder: Hiller, Frank, 4513 Langendorf (CH)
(74) Vertreter: Patentanwälte Schaad, Balass, Menzl & Partner AG

(57) **Zusammenfassung**

Das Verfahren und die Vermittlungszentrale dienen zur Abgabe von Daten, insbesondere von Musik- und/oder der Information dienender Sprachsignale, gegebenenfalls Signalisierungsinformationen, an mit einem Telekommunikationsnetz verbundene Teilnehmer. Die Vermittlungszentrale (100) weist eine Steuereinheit (101) auf, mittels der die abzugebenden Daten aus einer Speichereinheit (18, 108) abgerufen und zum Endgerät (1a; 1b; 1c) eines betreffenden Teilnehmers übertragen werden. Dabei werden an Teilnehmer abzugebende Daten einer Audiokompression unterworfen und/oder über das Telekommunikationsnetz in komprimierter Form bezogen, in die als Schreib-/Lese-Speicher ausgestaltete, rein elektronisch aufgebaute Speichereinheit (18, 108) abgelegt, bedarfsweise abgerufen, expandiert und zum Endgerät (1a; 1b; 1c) des betreffenden Teilnehmers übertragen.

## Beschreibung

Die Erfindung betrifft ein Verfahren zur Abgabe von Daten, insbesondere von Video-, Musik- und/oder der Information dienenden Sprachsignalen, gegebenenfalls Signalisierungsinformationen, an mit einem Telekommunikationssystem verbundene Teilnehmer sowie eine Vermittlungszentrale nach dem Oberbegriff des Patentanspruchs 1 bzw. 11.

In verschiedenen Phasen des Verbindungsaufbaus zwischen zwei mit einem Telekommunikationsnetz verbundenen Teilnehmern oder bei der Weitervermittlung eines Teilnehmers werden oft Informationen, gegebenenfalls Musik zum Teilnehmer übertragen.

Aus [1], Offenlegungsschrift WO 98/06209, ist ein MUSIC ON-HOLD System für Telekommunikationssysteme bekannt, bei dem von Abspielgeräten, Musikstücke an Teilnehmer übertragen werden. Durch Steuereinheiten werden die dezentral vorgesehenen elektro-mechanischen Abspielgeräte programmiert, so dass zu den Teilnehmern die vorgesehenen Musikstücke übertragen werden können. Die Kosten und der Unterhalt dieses Systems sind erheblich.

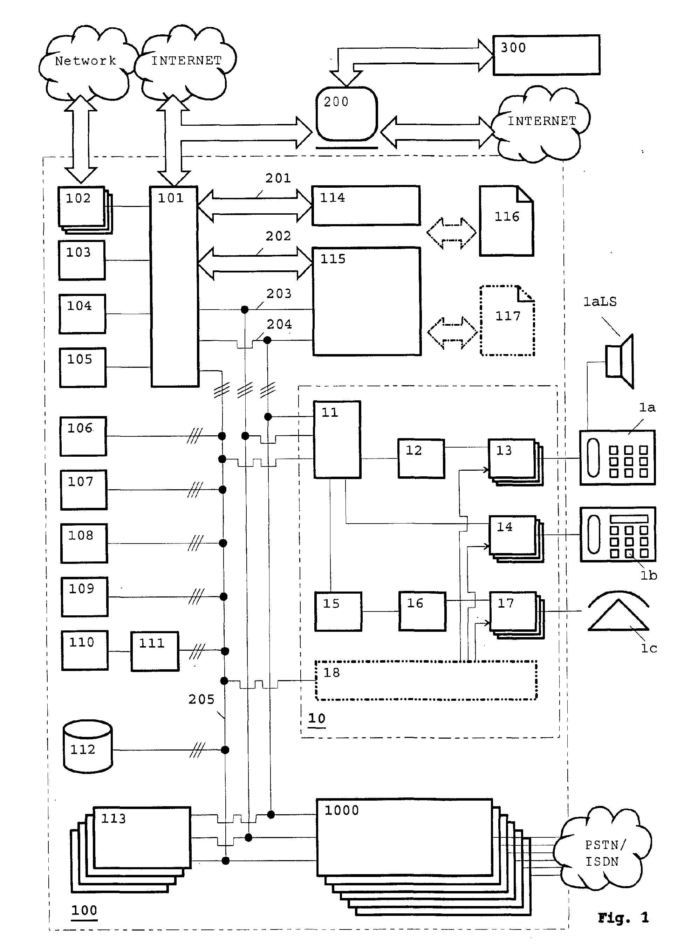

Aus [2], U.S. Patent No. 4,899,358, ist ein mittels einer Teilnehmervermittlungsstelle realisiertes Anrufinformationssystem bekannt, durch das der Name eines rufenden Teilnehmers aus einer Datenbank ausgelesen und nach Umwandlung von Text in Sprache auf dem Endgerät des gerufenen Teilnehmers akustisch ausgegeben wird. Dazu sind in den innerhalb der Benutzer-Peripherie der Vermittlungszentrale vorgesehenen Teilnehmeranschlussmodulen je mehrere Sprach- bzw. Signalgeneratoren vorgesehen (siehe [2], Fig. 1), durch die Text in Sprache umgewandelt und über analoge oder digitale Linienmodule an die Endgeräte abgegeben wird.

Durch die dezentrale Anordnung der Signalgeneratoren in der Vermittlungszentrale ergibt sich jedoch nicht nur ein aufwendiger Aufbau der Teilnehmeranschlussmodule, sondern auch ein aufwendiger Verfahrensablauf und eine erhöhte Belastung der Bussysteme, da die von den dezentral angeordneten Signalgeneratoren benötigten, rufende Teilnehmer betreffende Daten von einer ausserhalb der Vermittlungszentrale angeordneten Datenbank abgerufen, verteilt und anschliessend konvertiert werden müssen. Ferner entsteht bei hohem Verkehrsaufkommen eine erhebliche Belastung der Signalgeneratoren.

Der vorliegenden Erfindung liegt daher die Aufgabe zugrunde, ein Verfahren zur Abgabe von Daten, insbesondere von Musik- und/oder der Information dienenden Sprachsignalen, gegebenenfalls Signalisierungsinformationen, an mit einem Telekommunikationsnetz verbundene Teilnehmer abzugeben, das mit kostengünstigen Mitteln effizient durchführbar ist. Ferner ist eine zur Anwendung des Verfahrens geeignete Vermittlungszentrale anzugeben.

Die Lösung dieser Aufgabe gelingt mit den in Anspruch 1 bzw. 11 angegebenen Massnahmen.

Das erfindungsgemässe Verfahren, welches die Abgabe von Daten, insbesondere von Musik- und/oder der Information dienenden Sprachsignalen, gegebenenfalls Signalisierungsinformationen, an Endgeräten von mit einem Telekommunikationsnetz verbundenen Teilnehmern erlaubt, ist mit einfachen Massnahmen und Mitteln durchführbar. Bei breitbandigen Kommunikationssystemen ist ferner die Übertragung von Videosignalen möglich, die in der Vermittlungszentrale in komprimierter Form abgelegt werden.

An Teilnehmer abzugebende Daten werden erfindungsgemäss einer Audio- und/oder Videokompression unterworfen und / oder über das Telekommunikationsnetz in komprimierter Form bezogen, in eine als Schreib-/Lese-Speicher ausgestaltete, rein elektronisch aufgebaute Speichereinheit abgelegt, bedarfsweise abgerufen, expandiert und zum Endgerät des betreffenden Teilnehmers übertragen.

In einer vorzugsweisen Ausgestaltung der Erfindung werden gegebenenfalls zur Übertragung an Teilnehmer vorgesehene, auf einer Datenbank abgelegte, insbesondere für Signalisierungszwecke vorgesehene Daten, einem Signalgenerator zugeführt, von diesem in Sprachsignale umgewandelt und nach anschliessender Audiokompression in die Speichereinheit abgelegt, bedarfsweise daraus abgerufen, in Form von Sprachsignalen zum Endgerät eines gerufenen Teilnehmers übertragen und dort noch vor Übernahme der Verbindung abgegeben. Abzugebende Signalisierungsinformationen sind dabei bevorzugt aus dynamisch ändernden und statischen Elementen zusammengesetzt. Besonders vorteilhaft bei diesem Vorgehen ist, dass die Belastung des Signalgenerators stark reduziert wird, da die meisten der Elemente der Signalisierungsinformationen nur einmal konvertiert werden müssen und anschliessend jeweils aus der Speichereinheit abgerufen werden können. Eine Überlastung des Signalgenerators bei hohen Verkehrsaufkommen kann daher vermieden werden.

Während Zeitabschnitten, in denen ein Teilnehmer nicht mit einem weiteren Teilnehmer verbunden ist, können der Unterhaltung oder Information dienende Daten, Musik- oder Sprachsignale, aus der Speichereinheit abgerufen, expandiert und zum Teilnehmer übertragen werden.

Die Daten werden vorzugsweise in Abhängigkeit vorgegebener Kriterien oder Instruktionen des Teilnehmers, die gegebenenfalls während den genannten Zeitabschnitten vorzugsweise über die Tastatur des Endgerätes eingegeben werden, aus der Speichereinheit abgerufen, expandiert und zum Teilnehmer übertragen werden.

Vorzugsweise werden die Daten nach einem von der Moving Pictures Experts Group (MPEG) standardisierten und gegebenenfalls dazu erweiterten Verfahren, wie MPEG-X respektive MPEG-1, M-PEG-2, etc., codiert bzw. komprimiert und decodiert bzw. expandiert.

Das Reduktionsverhältnis des Kompressionsverfahrens wird bevorzugt unter Berücksichtigung der Bandbreite des für die Übertragung der Daten zum Endgerät vorgesehenen Sprach- oder Signalisierungskanals gewählt.

Nach dem erfindungsgemässen Verfahren arbeitende Vermittlungszentralen benötigen daher keine zum Abspielen von Musik geeigneten elektro-mechanischen Geräte mehr.

Die Erfindung wird nachstehend anhand von Zeichnungen näher erläutert. Dabei zeigt:
- Fig. 1: den Aufbau einer zur Anwendung des erfindungsgemässen Verfahrens geeigneten Vermittlungszentrale,
- Fig. 2a: dynamische Elemente von akustisch an einem Endgerät abgegebenen Signalisierungsinformationen,
- Fig. 2b: statische Elemente von akustisch an einem Endgerät abgegebenen Signalisierungsinformationen,
- Fig. 3a,b: den sequentiellen Ablauf der erfindungsgemässen Signalisierung nach Erhalt eines Anrufs und
- Fig. 4: mehrere Übertragungswege mit verschiedenen Daten- und Signalquellen, die über Funktionsmodule mit einer Datensenke verbunden sind.

Fig. 1 zeigt den detaillierten Aufbau einer zur Anwendung des erfindungsgemässen Verfahrens geeigneten Vermittlungszentrale 100, die über eine Benutzer-Peripherie bzw. Teilnehmeranschlussmodule 10 mit Endgeräten 1a, 1b, 1c, und über eine Netz-Peripherie bzw. Leitungsanschlussmodule 1000 mit dem öffentlichen Netz PSTN, beispielsweise dem ISDN (Integrated Services Digital Network) verbunden ist. Die prinzipielle Struktur sowie die Benutzer- und Netzanschlussstrukturen einer als ISDN-Nebenstellenanlage ausgestalteten Vermittlungszentrale sind in [3], Seiten 181-186 beschrieben und gezeigt (siehe Bild 5.12, Bild 5.13a und 5.13b). Die Struktur einer Teilnehmerstelle eines Netzbetreibers sowie der Anschluss von Endgeräten ist in [3], Seiten 147-151 beschrieben und gezeigt (siehe Bild 4.31). Aus [3], Bild 4.31 und Bild 5.12 ist ersichtlich, dass Signalisierungsfunktionen durch eine zentrale Steuereinheit ausgeführt werden, die mit einem zur Durchschaltung von Verbindungen zwischen rufenden und gerufenen Teilnehmern dienenden Koppelfeld verbunden ist. Der Austausch von Signalisierungsinformationen mit der zentralen Steuereinheit erfolgt normalerweise über eigene Steuerwege, um das Koppelfeld zu entlasten. Die Steuereinheit hat zudem Zugriff zu Speichermedien.

Verfahren zur Signalisierung in Telekommunikationssystemen mit leitungsvermittelten Verbindungen sind aus [3], Peter Bocker, ISDN-Digitale Netze für Sprach-, Text, Daten-, Video- und Multimediakommunikation, Springer Verlag, Berlin 1997, Kapitel 4.4.5, Seiten 126-131 bekannt. Während dem Verbindungsaufbau werden nach Übertragung einer SETUP-Information (siehe [3], Bild 4.27) auf dem Endgerät des gerufenen Teilnehmers Rufsignale abgegeben, wonach dieser die Verbindung übernehmen kann.

Die in Fig. 1 gezeigte Vermittlungszentrale 100, die eine zwischen der Benutzer-Peripherie 10 und der Netz-Peripherie 1000, angeordnete Steuereinheit 101 aufweist, wird nachstehend anhand von Fig. 1 beschrieben.

Die Steuereinheit 101 ist über eine Leitung 201 mit einem Taktgenerator 114 verbunden, von dem unter anderem Takte für das verwendete digitale Zeitmultiplexverfahren (siehe [3], Seite 203, Bild 6.4) generiert werden. Die Steuereinheit 101 steuert ferner über eine weitere Leitung 202 ein Koppelfeld 115, welches zur Vermittlung bzw. der Durchschaltung der in Bussystemen 203 und 204 geführten Sprach- und Signalisierungskanäle zwischen der Benutzer-Peripherie 10 und der Netz-Peripherie 1000 dient. Um auf die Sprach- und Signalisierungskanäle zugreifen zu können, sind die Bussysteme 203 und 204 ferner mit der Steuereinheit 101 verbunden.

An der Steuereinheit 101 ist ein für die Überwachung der Speisung vorgesehenes Modul 105 angeschlossen, durch das der Status der Betriebsspannungen überwacht und gemeldet wird. Unmittelbar an die Steuereinheit 101 angeschlossen sind in dieser vorzugsweisen Ausgestaltung ferner eine Karte 103 zur Erkennung der Nutzungsberechtigung, Relais 104 für Spezialanschlüsse, Ethernet und V.24 Schnittstellenkarten 102 für Wartung und Unterhalt der Vermittlungszentrale 100.

Über einen Adress- und Datenbus 205 ist die Steuereinheit 101 in dieser vorzugsweisen Ausgestaltung ferner mit einem Signalgenerator 106, einem Programm- und einem Arbeitsspeicher 107; 108, mit einem zur Abgabe von Zeit- und Datumsdaten vorgesehenen Real Time Clock-Modul 109, mit einer vorzugsweise zur Ablage von Teilnehmerinformationen dienenden Datenbank 112 und über eine Schnittstelleneinheit 111 mit einer Anzeige 110 verbunden, auf der der gewählte Betriebsmodus und der Betriebsstatus angezeigt werden.

Vorgesehen sind ferner Erweiterungssteckplätze für weitere Module 113, anhand denen die Leistungsmerkmale der Vermittlungszentrale 100 erweitert werden können (zum Beispiel: Voice Mail, etc.).

Das Teilnehmeranschlussmodul 10, von dem meist mehrere vorgesehen sind, dient dazu, die oft verschiedenartigen Endgeräte 1a, 1b, 1c der Teilnehmer über Zweidraht- oder ISDN-Schnittstellen an die Vermittlungszentrale 100 anzuschliessen (siehe auch [3], Seite 182, Bild 5.12). Durch Tastendruck werden von den sogenannten Endgeräten 1a, 1b Kommandos übertragen, die von der Vermittlungszentrale 100 ausgewertet und ausgeführt werden.

Das Teilnehmeranschlussmodul 10 weist eine dezentrale, von der Steuereinheit 101 gesteuerte Koppelung 11 auf, welche über einen als Datenpuffer dienenden Logikbaustein 15, einen Analog/Digital-Converter 16 und ein Schnittstellenmodul 17 mit einem analogen Endgerät 1c, und über Schnittstellenbausteine 12, 13, 14 mit digitalen Endgeräten 1a, 1b verbunden ist. Zur akustischen Abgabe der in Sprachform vorliegenden Signalisierungsinformationen ist das Endgerät 1a mit einem externen Lautsprecher 1aLS verbunden.

Wie in Fig. 1 gezeigt weist das Teilnehmeranschlussmodul 10 in einer vorzugsweisen Ausgestaltung eine mit der Steuereinheit 101 verbundene Speichereinheit 18 auf, aus der Daten zu den mit den Endgeräten 1a, 1b und 1c verbundenen Schnittstellenbausteinen 13, 14 und 17 übertragbar sind.

Nach aussen hat die Steuereinheit 101 über wenigstens eine Kommunikationsleitung vorzugsweise Zugriff auf das Internet, ein Rechnersystem 200 und/oder gegebenenfalls elektro-mechanische Musikdatenspeicher 300.

Erfindungsgemäss werden an Teilnehmer abzugebende Daten einer Audio- und/oder Videokompression unterworfen und / oder über das Telekommunikationsnetz in komprimierter Form bezogen und in die als Schreib-/Lese-Speicher ausgestaltete, rein elektronisch aufgebaute Speichereinheit (18, 108) abgelegt, bedarfsweise abgerufen, expandiert und zum Endgerät des betreffenden Teilnehmers übertragen.

An mit dem Telekommunikationssystem verbundene Teilnehmer können dabei Videosignale, Musik- und/oder der Information dienender Sprachsignale, gegebenenfalls Signalisierungsinformationen, übertragen werden. Mittels dem Leistungsmerkmal MUSIC ON HOLD werden dem Teilnehmer während Zeitabschnitten, in denen er nicht mit einem weiteren Teilnehmer verbunden ist, der Unterhaltung oder Information dienende Daten übertragen.

Alternativ oder zusätzlich werden während dem Verbindungsaufbau zwischen einem rufenden und einem gerufenen Teilnehmer mittels der Steuereinheit 101 anstelle konventioneller Signalisierungssignale, mittels denen zum Beispiel der Name des rufenden Teilnehmers auf der Anzeige des Endgerätes 1a; 1b dargestellt wird, in Form von Sprachsignalen vorliegende Signalisierungsinformationen zu den Endgeräten 1a, 1b der gerufenen Teilnehmer übertragen und von diesen entsprechend steuerbaren Endgeräten 1a, 1b akustisch abgegeben. Das einfacher aufgebaute Endgerät 1c ist hingegen nur für einfachste Telefonfunktionen (POTS) einschliesslich MUSIC-ON HOLD vorgesehen. Die der Signalisierung dienenden Sprachsignale werden vorzugsweise zentral von einem Signalgenerator 106, z.B. einem digitalen Signalprozessor (DSP), erzeugt und in der Speichereinheit 18; 108 abgelegt.

Wegen der besonderen Architektur ist ein Signalprozessor, wie beispielsweise der TMS320C2x von Texas Instruments, der ADSP-2100 von Analog Devices oder der PCB 501x von Philips (siehe [4], Roland Best, Digitale Signalverarbeitung und -simulation, AT Verlag, Aarau 1993, 2. Auflage, Seite 221), einem modernen Prozessor eines Personalcomputers in bestimmten Fällen deutlich überlegen.

Ohne Datenreduktion enthalten digitale Audiosignale in Compact-Disk-Qualität normalerweise mittels 16 Datenbits repräsentierte Abtastwerte, die mit einer Abtastrate aufgenommen wurden, die der doppelten Bandbreite des Audiosignals (>20 kHz) entspricht. Für eine Sekunde Stereomusik in Compact-Disk-Qualität wird auf einer Compact-Disk daher ein Speicherbereich von rund 1,4 Mbit belegt. Wie in [3], Seiten 231-233 beschrieben, wird beim ISDN eine Bandbreite von 3400 Hz für die Audiosignale vorgesehen, die mit einer Abtastrate von 8000 Hz in 8 Bit weite Abtastwerte umgewandelt werden. Pro Sekunde werden daher 64'000 Bit über einen Sprachkanal des ISDN übertragen.

Auch bei der Konversion der z.B. auf einer Datenbank gespeicherten Daten, die für Signalisierungszwecke verwendbar sind, entstehen grosse Datenmengen. Nach dem aus [2] bekannten Verfahren werden die Daten daher bedarfsweise aus einer Datenbank abgerufen, mittels dem Signalgenerator konvertiert und zum Teilnehmer übertragen. Bei hohen Verkehrsaufkommen kann dies, wie bereits erwähnt, zu einer Überlastung des Signalgenerators führen.

Erfindungsgemäss werden daher vorzugsweise alle an die mit dem Telekommunikationssystem verbundenen Teilnehmer zu übertragenden Daten, insbesondere Musik- und/oder der Information dienende Sprachsignale, gegebenenfalls Signalisierungsinformationen, in komprimierter Form in der Speichereinheit 18; 108 abgelegt, bedarfsweise abgerufen und in einem Expansionsmodul 116 expandiert. Die Kompression kann in der Steuereinheit 101 der Vermittlungszentrale 100 oder in einem externen Rechner 200 durch Implementation des softwarebasierten Kompressionsmoduls 117 erfolgen.

Die Kompression der in der Speichereinheit 18, 108 abzulegenden und bedarfsweise an die Teilnehmer zu übertragenden Daten erfolgt ebenfalls innerhalb oder ausserhalb der Vermittlungszentrale 100.

Vorzugsweise werden Musikstücke oder Videoclips in komprimierter Form z.B. über die Schnittstellenkarten 102, beispielsweise über ein lokales Netzwerk, die Leitungsanschlussmodule 1000, das Internet oder von einem externen Rechner 200 geladen, durch den z.B. von elektro-mechanischen Geräten 300 erzeugte Signale komprimiert und an die Vermittlungszentrale 100 abgegeben werden.

In nicht komprimierter Form an die Vermittlungszentrale 100 übertragene Daten werden mittels einem Kompressionsmodul 117 komprimiert, das bedarfsweise durch die Steuereinheit 101 der Vermittlungszentrale 100 implementiert wird.

Des Expansionsmodul 116 und/oder das Kompressionsmodul 117 können jedoch auch hardwaremässig, z.B. mittels Einsatz von Signalprozessoren realisiert werden.

Beispielsweise kann der Signalgenerator 106 die zu konvertierenden Signalsierungsinformationen direkt in komprimierte Sprachsignale umwandeln. Weitere Daten, z.B. Musiksignale, können in einer vorzugsweisen Ausgestaltung der Erfindung ebenfalls durch den Signalgenerator 106 komprimiert, gegebenenfalls sogar expandiert werden.

Der Signalgenerator 106 erzeugt bei der vorliegenden Anwendung, nebst den Sprachsignalen für die akustisch abzugebenden Signalisierungsinformationen vorzugsweise auch die zentralen Töne, wie Summton, Besetztton, etc.. Ferner generiert und detektiert er DTMF-Töne (Dial Tone Multiple Frequency). Vorzugsweise mischt er auch Sprachkanäle für Konferenzgespräche. Der Signalgenerator 106 kann daher durch die Erweiterung der Funktionalität eines in einer Vermittlungsstelle meist ohnehin vorhandenen Signalprozessors in einfacher Weise geschaffen werden.

Zur Kompression (auch Codierung) und Expansion (auch Decodierung) von Audiosignalen werden die Daten vorzugsweise nach einem von der Moving Pictures Experts Group (MPEG) oder der Internationalen Organisation für Standardisierung (ISO) standardisierten und gegebenenfalls dazu erweiterten Verfahren, wie MPEG Layer-X bzw. ISO/IEC 11172-3, ISO/IEC 13818-3, ISO/IEC 13818-7, ISO/IEC 14496-3 oder H.261 bearbeitet. Zur Kompression von Videosignalen sind weitere MPEG Standards MPEG1, ..., MPEG7 vorgesehen. Selbstverständlich können beliebige weitere oder weiterentwickelte Verfahren verwendet werden.

Bekannte Kompressionsverfahren reduzieren die Datenmenge hauptsächlich durch Unterdrückung irrelevanter Frequenzbereiche und redundanter Signale. Bei der Wahl des Reduktionsfaktors wird vorzugsweise berücksichtigt, dass über einen ISDN B- bzw. Sprachkanal nur 64 Kbit/s übertragen werden können. Die Analyse des zu komprimierenden Signals erfolgt dabei durch ein psycho-akustisches Modell, durch das ein Quantisierer und Codierer gesteuert wird, durch den ein Datenstrom (bitstream) abgegeben wird, welcher in einer nachfolgenden Stufe in Rahmen aufgeteilt wird.

Expandierte Signale werden durch die Steuereinheit 101 in einen mit dem Endgerät 1a, 1b, 1c führenden Sprachkanal eingefügt. Dies geschieht durch das Koppelfeld, die Steuereinheit 101 oder Bauteile in den Teilnehmeranschlussmodulen 10, die die z.B. PCM-codierten Sprachsignale in die Zeitschlitze der entsprechenden, nach dem Zeitmultiplexverfahren organisierten Sprachkanäle einfügen (siehe z.B. [3], Seiten 203 und 204, Bilder 6.4 und 6.5). Die Signalisierungsinformationen können grundsätzlich auch über einen Signalisierungskanal bzw. den ISDN D-Kanal zu den Teilnehmeranschlussmodulen 10, gegebenenfalls auch zu den Endgeräten 1a, 1b übertragen werden. Die Bandbreite des Signalisierungskanals genügt grundsätzlich für die Übertragung geringer Datenmengen. Die abzugebenden Signalisierungsinformationen können ferner in den Endgeräten 1a, 1b zwischengespeichert werden. Ferner können für den Teilnehmer bestimmte Daten und/oder Signale sowohl über einen Signalisierungs-, als auch über (wenigstens) einen Nutzkanal zum Teilnehmer übertragen. Bei der Übertragung von Musikstücken über einen Nutzkanal können z.B. die zugehörigen Informationen (Titel, Interpret, etc.), die im MPEG-Format integriert sind, parallel über den zugehörigen Signalisierungskanal übertragen und am Endgerät angezeigt werden.

Sofern die Signalisierungsinformationen über den Sprach- bzw. B-Kanal übertragen werden, teilt die Steuereinheit 101 dem Endgerät 1a; 1b über Steuerleitungen (siehe [3], Seite 182, Bild 5.12, Leitungen 4) mit, dass der Sprachkanal, ohne die Verbindung zu übernehmen, mit dem internen oder externen Lautsprecher 1aLS des entsprechenden Endgerätes 1a zu verbinden ist. Nach Abhören der akustisch abgegebenen Signaliserungsinformationen kann der gerufene Teilnehmer den Anruf entgegennehmen. Vorzugsweise werden sprachgesteuerte Endgeräte 1a, 1b verwendet, so dass ein Teilnehmer, der sich nicht am Arbeitsplatz befindet, durch Abgabe von Sprachkommandos die Verbindung übernehmen oder ablehnen kann.

Die Signalisierungsinformationen betreffen vorzugsweise Daten der zu erstellenden Verbindung. Möglich ist ferner die Nutzung weiterer Informationen. Beispielsweise kann sich der Teilnehmer auch die vom Real Time Clock abgegebene Zeitinformation ansagen lassen. Möglich ist daher die Ansage dynamisch ändernder und statischer Informationselemente, die bedarfsweise verknüpft werden. Die Zeitansage ist z.B. folgendermassen zusammengesetzt "Es ist [statisches Element]" - "Stundenzahl [dynamisches Element]" - "Uhr [statisches Element]" - - "Minutenzahl [dynamisches Element]".

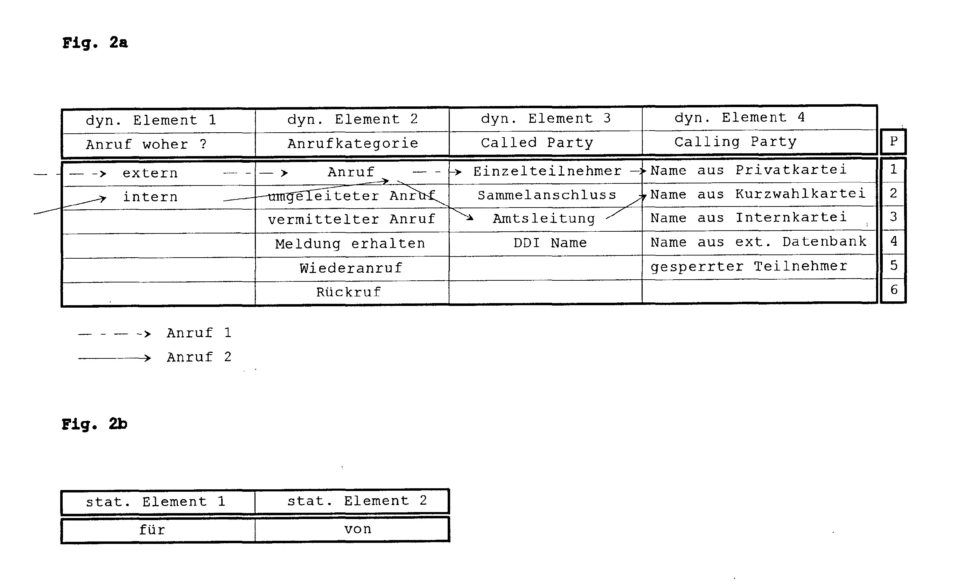

Fig. 2 zeigt, wie verbindungsrelevante Ansagen mittels dynamischen und statischen Elementen zusammengestellt werden. In Fig. 2a sind dynamisch ändernde und in Fig. 2b sind statische Elemente in Tabellen eingetragen. In der Tabelle von Fig. 2a sind in Spalte 1 mögliche Angaben zur Herkunft des Anrufs, in Spalte 2 mögliche Angaben zu Art des Anrufs und der teilweise erstellten Verbindung, in Spalte 3 mögliche Angaben zum gerufenen Teilnehmer oder der Art des Anschlusses des gerufenen Teilnehmers und in Spalte 4 mögliche Angaben zum gerufenen Teilnehmer enthalten, die entsprechend einer gegebenenfalls vom Teilnehmer festgelegten Rangfolge abgerufen werden können.

Der Ausdruck "Anruf" in Spalte 2 steht für einen gewöhnlichen Erstanruf. "umgeleiteter Anruf" wird verwendet, wenn der Anruf bei einem anderen Teilnehmer eingetroffen ist und von diesem umgeleitet wurde. "vermittelter Anruf" wird angesagt, wenn die Telefonistin den Anruf übernommen und zum gewünschten Teilnehmer weitervermittelt hat. "Meldung erhalten" wird angesagt, wenn der Teilnehmer eine Textmeldung erhalten hat (Anwendungsbeispiel: gesprochener Telefax). Wiederanruf oder Rückruf sind weitere nützliche Spezialansagen.

Spalte 3 enthält die Auswahl der Anruf-Adressaten (called parties). Ein Sammelanschluss ist eine Konfiguration einer Nebenstellenanlage, bei welcher mehrere Teilnehmer unter einer Nummer erreichbar sind. Der Name des Sammelanschlusses kennzeichnet die normalerweise zu einer Arbeitsgruppe zusammengeschlossenen Teilnehmer. "Amtsleitung" bezeichnet die Teilnehmergruppe, die diesem Anschluss zugewiesen ist. "DDI Name" ist der einer Direktwahlnummer zugeordnete Name. Ein Teilnehmer kann ferner in einer von mehreren Identitäten gerufen werden. Zum Beispiel mit seinem persönlichen Namen oder seiner Funktionsbezeichnung. Die Bezeichnung mit der höchsten Priorität wird angesagt. Die Elemente in Spalte 4 zeigen, von wem der Anruf ausgelöst wurde (calling party).

Die beschriebenen dynamischen Elemente von Fig. 2a werden mit den in Fig. 2b auszugsweise gezeigten statischen Elemente verknüpft.

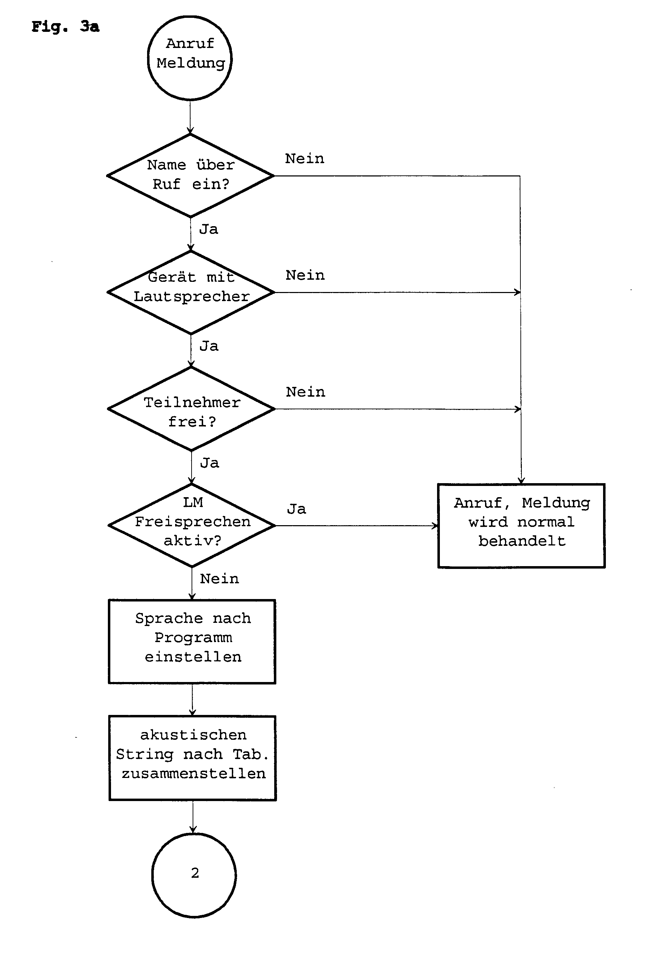

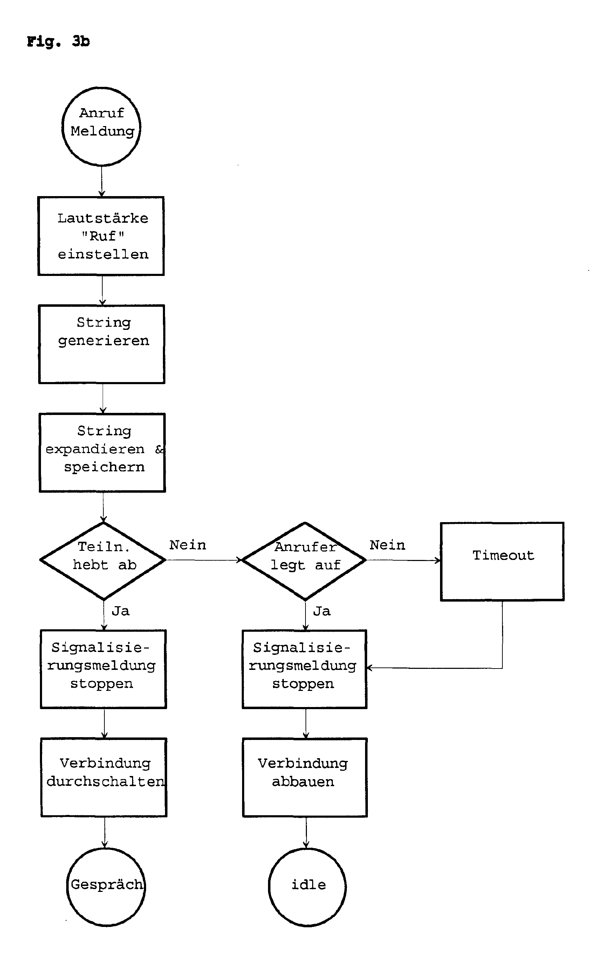

Fig. 3a und Fig. 3b zeigen einen vorzugsweisen Ablauf des erfindungsgemässen Verfahrens bei Eintreffen eines Anrufs. Zuerst prüft die Steuereinheit 101, ob das erfindungsgemässe Leistungsmerkmal "Name über Ruf" beim Endgerät 1a, 1b des gerufenen Teilnehmers eingeschaltet ist. Ist dies nicht der Fall ist, wird der Anruf in herkömmlicher Art und Weise behandelt.

Als nächstes wird geprüft, ob das Endgerät 1a, 1b des gerufenen Teilnehmers einen Lautsprecher besitzt. Ist das Endgerät 1a, 1b nicht für Ansage ausgerüstet, wird ein herkömmlicher Anruf generiert.

Nun wird abgefragt, ob der gerufene Teilnehmer frei ist. Dies ist erforderlich, um einen freien Sprach- bzw. ISDN-B-Kanal benutzen zu können. Ist der Teilnehmer besetzt, so wird der Anruf ebenfalls auf herkömmliche Weise offeriert.

Anschliessend wird geprüft, ob der gerufene Teilnehmer das automatische Freisprechen aktiviert hat. Ist dies der Fall, so ist es nicht möglich, eine Rufansage zu generieren, da das Endgerät 1a, 1b sofort in den Freisprech-Modus schalten würde. Der Anruf wird als normaler Ruf weiter behandelt.

Nach diesen Tests wird die eingestellte Sprache des Telefons abgefragt. Dies, damit die statischen Text-Elemente gemäss Fig. 2b in der richtigen Sprache abgefragt und abgespielt werden können.

In Abhängigkeit der vorliegenden Daten und Instruktionen werden von der Steuereinheit 101 die statischen und dynamischen Elemente zu einer Ansage zusammengestellt, expandiert und zwischengespeichert.

Anschliessend wird das Endgerät 1a, 1b des gerufenen Teilnehmers auf die vorprogrammierte Lautstärke des Rufes eingestellt.

Dann beginnt der Signalgenerator 106, auf entsprechenden Befehl der Steuereinheit 101, die expandierten Sprachsignale in die Zeitschlitze des betreffenden Sprachkanals einzuspielen. Über den Signalisierungs- bzw. ISDN D-Kanal wird das Endgerät 1a, 1b des gerufenen Teilnehmers ferner derart eingestellt, dass die über den Sprachkanal übertragenen Signalisierungsinformationen auf dem Lautsprecher ausgeben werden. Die resultierende Ansage ertönt im allgemeinen als sich wiederholende Folge.

Übernimmt der gerufene Teilnehmer die Verbindung z.B. durch Abheben des Hörers, wird dies detektiert und der Steuereinheit 101 gemeldet. Gesteuert durch die Zeitschlitzvermittlung, werden die Kanäle des rufenden und des gerufenen Teilnehmers durch das von der Steuereinheit 101 gesteuerte Koppelfeld anschliessend miteinander verbunden, wonach die Verbindung erstellt ist (siehe [3], Seite 127, Bild 4.27).

Nimmt der Zielteilnehmer den Anruf nicht entgegen oder der Anrufer legt vorher auf, wird die Verbindung abgebaut. Das gleiche geschieht, wenn der Anruf durch Time-out vom System beendet wird. Danach geht die Vermittlungszentrale 100 wieder in den Ausgangszustand.

An Teilnehmer zu übertragende Daten können über das Internet, ein drahtloses oder ein drahtgebundenes Telekommunikationsnetz übertragen werden. In [5], Der Fernmelde Ingenieur, Heft 1/'99, Seiten 65 - 67 ist ein Multimedia Kommunikationssystem gezeigt, bei dem MPEG-4 basierte Daten von einem Multimedia Server über das ISDN oder ein Netzwerk (WAN/LAN) zu mobilen Multimedia-Endgeräte übertragbar sind. Erfindungsgemäss können daher bereits codierte bzw. komprimierte Video- und/oder Audiodaten drahtlos oder drahtgebunden zu einer Vermittlungsstelle übertragen und dort gespeichert werden. Bei breitbandigen Telekommunikationssystemen, an die Multimedia-Endgeräte, z.B. Bildtelefone angeschlossen sind, werden vorzugsweise nebst Audio- auch Videosignale aus der Speichereinheit 18, 108 ausgelesen expandiert bzw. decodiert und zu einem Teilnehmer übertragen werden. Einem gerufenen Teilnehmer können daher Bilder des rufenden Teilnehmers oder dessen Firma übertragen werden. Vor dem Eintreten auf das Gespräch kann sich der gerufene Teilnehmer daher ein Bild seines Gesprächspartners und von dessen Umfeld machen.

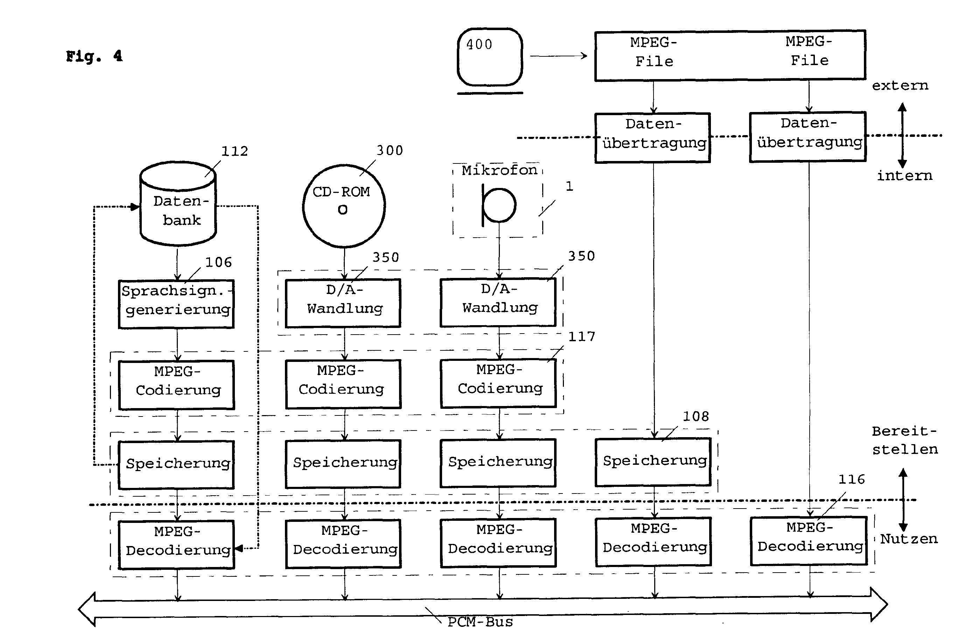

Oben wurde die erfindungsgemässe Übertragung von Video-, Musik- und/oder der Information dienenden Sprachsignalen, gegebenenfalls Signalisierungsinformationen, an mit einem Telekommunikationssystem verbundene Teilnehmer erläutert. In Fig. 4 sind die wesentlichen Funktionsmodule, die für die Durchführung erfindungsgemässen Verfahrensablaufs benötigt werden, in der Übersicht dargestellt.

Fig. 4 zeigt mehrere Übertragungswege mit verschiedenen Daten- und Signalquellen, von denen für Teilnehmer bestimmte Signale und Daten über Funktionsmodule mit einem PCM-Bus verbunden sind, über den die Signale und Daten zu den Teilnehmern übertragen werden.

Auf einem ersten Übertragungsweg werden Daten von der internen oder externen Datenbank 112 beispielsweise im ASCII-Format zum Signalgenerator 106 übertragen und dort mittels einem entsprechenden Modul in Sprachsignale gewandelt, in weiteren Modulen komprimiert bzw. codiert und einer Speichereinheit, z.B. der Speichereinheit 108 oder der Datenbank 112, zugeführt. Bei Bedarf werden die codierten Sprachsignale von der Speichereinheit 108 oder der Datenbank 112 decodiert und zu einem Teilnehmer übertragen.

Auf einem zweiten Übertragungsweg werden Daten von einem internen oder externen elektro-mechanische Musikdatenspeicher 300 über eine Digital-Analog-Wandlerstufe 350 dem Kompressionsmodul 117 zugeführt, komprimiert, anschliessend gespeichert, bedarfsweise abgerufen, decodiert und zu einem Teilnehmer übertragen.

Auf einem dritten Übertragungsweg werden von einem Teilnehmer mittels seinem Endgerät 1 abgegebene Sprachsignale über die Digital-Analog-Wandlerstufe 350 dem Kompressionsmodul 117 zugeführt, komprimiert, anschliessend gespeichert, bedarfsweise abgerufen und nach erfolgter Decodierung zu einem Teilnehmer übertragen. Diese Massnahmen sind ganz besonders vorteilhaft, da sie eine Individualisierung des Kommunikationssystems erlaubt. Die gesprochenen Meldungen sind dabei als Signalisierungsinformationen oder als Informationen anstelle von Music-on-hold über den Nutz- oder Signalisierungskanal übertragen, sofern es die zur Verfügung stehende Bandbreite erlaubt.

Ferner können komprimierte Daten, z.B. MPEG-Files auch von externen Servern 400 geladen, zur Vermittlungszentrale 100 übertragen und, gegebenenfalls nach Ablage in einem Speicher 108, decodiert und an einen Teilnehmer abgegeben werden. Selbstverständlich können auch mehrere Musikkanäle verwendet werden, die nach vorgesehenen Kriterien den Nutzkanälen zugeschaltet werden
[1] Offenlegungsschrift WO 98/06209 (Hazenfield)
[2] U.S. Patent No. 4,899,358 (Blakley)
[3] Peter Bocker, ISDN-Digitale Netze für Sprach-, Text, Daten-, Video- und Multimediakommunikation, Springer Verlag, Berlin 1997
[4] Roland Best, Digitale Signalverarbeitung und - simulation, AT Verlag, Aarau 1993
[5] Der Fernmelde Ingenieur, Verlag für Wissenschaft und Leben Georg Heidecker GmbH, Erlangen, Heft 1/'99, MINT-Projekt, Beitrag 4, Seiten 65 - 67

## Patentansprüche

1. Verfahren zur Abgabe von Daten, insbesondere von Video-, Musik- und/oder der Information dienender Sprachsignale, gegebenenfalls Signalisierungsinformationen, an mit einem Telekommunikationsnetz verbundene Teilnehmer, mit einer Vermittlungszentrale (100), einer Nebenstellenanlage oder einer Teilnehmervermittlungsstelle, die eine Steuereinheit (101) aufweist, mittels der die abzugebenden Daten aus einer Speichereinheit abgerufen und zum Endgerät (1a; 1b; 1c) eines betreffenden Teilnehmers übertragen werden, **dadurch gekennzeichnet, dass**
a) an Teilnehmer abzugebende Daten einer Kompression unterworfen und/oder über das Telekommunikationsnetz in komprimierter Form bezogen,
b) in die als Schreib-/Lese-Speicher ausgestaltete, rein elektronisch aufgebaute Speichereinheit (18, 108) abgelegt,
c) bedarfsweise abgerufen, expandiert und zum Endgerät (1a; 1b; 1c) des betreffenden Teilnehmers übertragen werden.

2. Verfahren nach Anspruch 1, **dadurch gekennzeichnet, dass** gegebenenfalls zur Übertragung an Teilnehmer vorgesehene, auf einer Datenbank (112) abgelegte Daten, einem Signalgenerator (106) zugeführt, von diesem in Sprachsignale umgewandelt und nach anschliessender Audiokompression in die Speichereinheit (18, 108) abgelegt werden.

3. Verfahren nach Anspruch 2, **dadurch gekennzeichnet, dass** Daten aus der Speichereinheit (18, 108) abgerufen, in Form von Sprachsignalen zum Endgerät (1a; 1b) eines gerufenen Teilnehmers übertragen und dort noch vor Übernahme der Verbindung abgegeben werden, wobei die zentral angeordnete Steuereinheit (101) oder eine dezentral angeordnete Steuereinheit
a) feststellt, ob das Endgerät (1a; 1b) des gerufenen Teilnehmers zur Abgabe in Form von Sprachsignalen vorliegenden Signalisierungsinformationen ausgerüstet ist,
b) die die zu erstellende Verbindung betreffenden komprimierten Sprachsignale von der Speichereinheit (18, 108) abruft und expandiert,
c) die expandierten Sprachsignale in einen mit dem Endgerät (1a; 1b) des gerufenen Teilnehmers verbundenen Sprach- oder Signalisierungskanal einfügt und
d) das Endgerät (1a; 1b) des gerufenen Teilnehmers zur Abgabe des Sprachsignals über einen eingebauten oder einen externen Lautsprecher veranlasst.

4. Verfahren nach Anspruch 1, 2 oder 3, **dadurch gekennzeichnet, dass** Signalisierungsinformationen dynamisch ändernde Elemente wie
a) Herkunft des Anrufs, wie "intern" oder "extern",
b) Anrufkategorie, wie "Anruf", "Rückruf", "Meldung erhalten", "umgeleiteter Anruf" oder "vermittelter Anruf",
c) Name des gerufenen Teilnehmers, gegebenenfalls eines Einzelteilnehmers, Sammelanschlusses, Amtsanschlusses oder einer Kurzwahl, und/oder
d) Name des rufenden Teilnehmers und/oder statische Elemente, wie
e) "für" oder "von"
enthalten, die in Form von komprimierten Sprachsignalen in der Speichereinheit (18, 108) abgelegt und von dort bedarfsweise abgerufen werden.

5. Verfahren nach einem der Ansprüche 1 bis 4, **dadurch gekennzeichnet, dass** der Unterhaltung oder Information des Teilnehmers dienende Daten, in komprimierter oder nicht komprimierter Form, gegebenenfalls über das Telekommunikationsnetz, ein Funknetz oder das Internet, vom Endgerät eines Teilnehmers, von einem Datenträger oder einer Datenbank geladen und nach Audiokompression nicht komprimierter Daten in der Speichereinheit (18, 108) abgelegt werden.

6. Verfahren nach einem der Ansprüche 1 bis 5, **dadurch gekennzeichnet, dass** während Zeitabschnitten, in denen ein Teilnehmer nicht mit einem weiteren Teilnehmer verbunden ist, der Unterhaltung oder Information dienende Daten aus der Speichereinheit (18, 108) abgerufen, expandiert und zum Teilnehmer übertragen werden.

7. Verfahren nach Anspruch 6, **dadurch gekennzeichnet, dass** Daten in Abhängigkeit vorgegebener Kriterien oder Instruktionen des Teilnehmers, die gegebenenfalls während den genannten Zeitabschnitten vorzugsweise über die Tastatur des Endgerätes (1a; 1b) eingegeben werden, aus der Speichereinheit (18, 108) abgerufen, expandiert und zum Teilnehmer übertragen werden.

8. Verfahren nach einem der Ansprüche 1 bis 7, **dadurch gekennzeichnet, dass** die Daten nach einem von der Moving Pictures Experts Group (MPEG) oder der Internationalen Organisation für Standardisierung (ISO) standardisierten und gegebenenfalls dazu erweiterten Verfahren, wie MPEG Layer-X bzw. ISO/IEC 11172-3, ISO/IEC 13818-3, ISO/IEC 13818-7 oder ISO/IEC 14496-3 komprimiert und expandiert werden.

9. Verfahren nach einem der Ansprüche 1 bis 8, **dadurch gekennzeichnet, dass** das Reduktionsverhältnis des Kompressionsverfahrens unter Berücksichtigung der Bandbreite des für die Übertragung der Daten vorgesehenen Sprach- oder Signalisierungskanals gewählt wird.

10. Verfahren nach einem der Ansprüche 1 bis 9, **dadurch gekennzeichnet, dass** der Unterhaltung und/oder der Information dienende Daten über einen Sprach- und einen Signalisierungskanal zum Teilnehmer übertragen werden, wobei die über den Signalisierungskanal übertragenen Daten, die Informationen betreffend die über den Sprachkanal übertragenen Daten enthalten, auf der Anzeige des Endgerätes (1a; 1b) angezeigt werden.

11. Vermittlungszentrale (100) für ein Telekommunikationssystem, insbesondere eine Nebenstellenanlage oder eine Teilnehmervermittlungsstelle, die zur Abgabe von Daten, insbesondere von Video-, Musik- und / oder der Information dienender Sprachsignale, gegebenenfalls Signalisierungsinformationen, an mit einem Telekommunikationsnetz verbundene Teilnehmer geeignet ist, mit Leitungsanschlussmodulen (1000), die mittels einem von einer Steuereinheit (101) gesteuerten Koppelfeld (150) über Teilnehmeranschlussmodule (10) mit Endgeräten (1a, 1b, 1c) der Teilnehmer verbindbar sind und mit wenigstens einer zentral oder dezentral je in einem Teilnehmeranschlussmodul (10) angeordneten Speichereinheit (18, 108), **dadurch gekennzeichnet, dass** die als Schreib-/Lese-Speicher ausgestaltete, rein elektronisch aufgebaute Speichereinheit (18, 108) zur Ablage komprimierter Daten vorgesehen ist, die an Teilnehmer abzugeben sind, dass ein Expansionsmodul (116) vorgesehen ist, in dem die von der Speichereinheit (18, 108) abgerufenen Daten expandierbar und von dem die expandierten Daten über einen Sprach- oder einen Signalisierungskanal zum Endgerät (1a; 1b; 1c) des betreffenden Teilnehmers übertragbar sind.

12. Vermittlungszentrale nach Anspruch 11, **dadurch gekennzeichnet, dass** ein Kompressionsmodul (117) vorgesehen ist, mittels dem zur Ablage in der Speichereinheit (18, 108) vorgesehene Daten komprimierbar sind.

13. Vermittlungszentrale nach Anspruch 11 oder 12, **dadurch gekennzeichnet, dass** das Kompressionsmodul (117) und das Expansionsmodul (116) nach einem von der Moving Pictures Experts Group (MPEG) oder der Internationalen Organisation für Standardisierung (ISO) standardisierten und gegebenenfalls dazu erweiterten Verfahren, wie MPEG Layer-X bzw. ISO/IEC 11172-3, ISO/IEC 13818-3, ISO/IEC 13818-7 oder ISO/IEC 14496-3 arbeiten.

14. Vermittlungszentrale nach Anspruch 11, 12 oder 13, **dadurch gekennzeichnet, dass** das Kompressionsmodul (117) und das Expansionsmodul (116) Softwaremodule sind, die mit der Steuereinheit (101) entsprechende Daten austauschen.

15. Vermittlungszentrale nach Anspruch 11, 12, 13 oder 14, **dadurch gekennzeichnet, dass** ein mit der Steuereinheit (101) verbundener, vorzugsweise als digitaler Signalprozessor ausgestalteter Signalgenerator (106) vorgesehen ist, dem gegebenenfalls zur Übertragung an Teilnehmer vorgesehene, auf einer Datenbank (112) abgelegte Daten zuführbar sind, die von diesem in Sprachsignale konvertierbar und nach anschliessender Audiokompression in der Speichereinheit (18, 108) ablegbar sind.

16. Vermittlungszentrale nach einem der Ansprüche 11 bis 15, **dadurch gekennzeichnet, dass** die komprimierten Daten mittels der Steuereinheit (101) aus der Speichereinheit (18, 108) abrufbar, im Expansionsmodul (116) expandierbar und in einen mit dem Endgerät (1a; 1b) eines gerufenen Teilnehmers verbundenen Sprach- oder Signalisierungskanal einfügbar sind.

17. Vermittlungszentrale nach einem der Ansprüche 11 bis 16, **dadurch gekennzeichnet, dass** die Steuereinheit (101) derart zur Signalisierung der Endgeräte (1a; 1b) gerufener Teilnehmer geeignet ist, dass diese, noch vor Übernahme der Verbindung durch den gerufenen Teilnehmer, zur Abgabe expandierter Sprachsignale über einen eingebauten oder einen externen Lautsprecher veranlasst werden können.
